(19) Europäisches Patentamt
European Patent Office
Office européen des brevets

(11) Numéro de publication : **0 629 678 A1**

(12) # DEMANDE DE BREVET EUROPEEN

(21) Numéro de dépôt : **94401317.6**

(51) Int. Cl.$^5$ : **C09K 21/02**, C09K 21/14, C08K 3/34

(22) Date de dépôt : **13.06.94**

(30) Priorité : **18.06.93 FR 9307388**

(43) Date de publication de la demande : **21.12.94 Bulletin 94/51**

(84) Etats contractants désignés : **AT BE DE DK ES FR GB IT LU NL SE**

(71) Demandeur : **ELF ATOCHEM S.A.**
**4 & 8, Cours Michelet**
**La Défense 10**
**F-92800 Puteaux (FR)**

(72) Inventeur : **Bourgigot, Serge**
**7, rue Gosselet**
**F-59000 Lille (FR)**
Inventeur : **Breant, Patrice**
**2, parc Maubuisson**
**F-27470 Serquigny (FR)**
Inventeur : **Delobel, René**
**100, Avenue de Courtrai**
**F-59650 Villeneuve d'Ascq (FR)**
Inventeur : **Nathiez, Pascal**
**2, Résidence des Mimosas**
**F-62113 Sailly-Labourse (FR)**

(54) **Compositions ignifugeantes pour mélanges de résines thermoplastiques contenant une zéolithe.**

(57) L'invention concerne une composition ignifugeante sans halogènes pour mélanges de résines thermoplastiques contenant au moins un agent deshydratant et au moins une zéolithe.

EP 0 629 678 A1

La présente invention a pour objet une composition utilisable, notamment, pour l'ignifugation des matières organiques comprenant au moins un agent deshydratant et au moins une zéolithe.

Pour de nombreuses applications, il est indispensable de disposer de matières organiques telles que les mélanges de résines thermoplastiques ayant un comportement au feu amélioré.

En effet, les mélanges de résines thermoplastiques présentent souvent une faible résistance au feu.

Lors d'un incendie, ils posent de nombreux problèmes dûs notamment au dégagement de gaz corrosifs et toxiques et à la formation de fumées parfois très opaques.

Aussi un des objectifs de la présente invention est d'arriver à ce que ces mélanges de résines thermoplastiques propagent aussi lentement que possible voir pas du tout la flamme accidentelle.

A cette fin diverses solutions ont déjà été proposées pour réduire le plus possible la propagation de cette flamme.

On préconise d'ajouter aux mélanges de résines thermoplastiques des composés dénommés retardateur de combustion (ou ignifugeants) qui sont généralement des composés organiques chlorés ou bromés tels que les paraffines chlorées, les polybromodiphényléthers.

Ces retardateurs de combustion peuvent être associés avec des retardateurs de combustion auxiliaires tels que l'oxyde d'antimoine ($Sb_2O_3$) afin d'obtenir un niveau d'efficacité suffisant.

Ces divers additifs peuvent être utilisés en des proportions qui peuvent aller de quelques pour cent à plusieurs dizaines de pour cent en poids par rapport au mélange de résines thermoplastiques à ignifuger.

Toutefois l'utlisation de ces additifs halogénés en quantités importantes occasionne un certain nombre d'inconvénients notamment au moment de la mise en oeuvre (compoundage et moulage) desdits mélanges de résines thermoplastiques ignifugés.

Ces mélanges de résines thermoplastiques sont en effet soumis à des températures et des contraintes mécaniques de plus en plus drastiques qui sont susceptibles de provoquer un début de décomposition. Ce début de décomposition est de nature à abaisser de façon notoire les propriétés mécaniques et la tenue au feu des mélanges de résines thermoplastiques ignifugés.

En outre les produits de décompositions peuvent entraîner la détérioration par corrosion des parties métalliques des outillages de mise en oeuvre.

Il a maintenant été trouvé une composition ignifugeante sans halogène, caractérisée en ce qu'elle comprend au moins un agent deshydratant et au moins une zéolithe.

Selon la présente invention on entend par zéolithes des aluminosilicates cristallins synthétiques ou naturels constitués de tétraèdres $AlO_4$ et $SiO_4$ reliés entre eux par les sommets oxygène. L'assemblage de tétraèdres dans l'espace forme des polyèdres qui délimitent un réseau de canaux, cages, cavités dans lesquels se placent des cations en des points où ils équilibrent les charges négatives portées par les tétraèdres $AlO_4$.

La formule structurelle basée sur la plus petite cellule unitaire est représentée par: $Mx/_n\ [(AlO_2)_x, (SiO_2)_y]\ w\ H_2O$ (I) dans laquelle :

- **M** représente un cation d'un métal alcalin tel que Li, Na, K et/ou un cation d'un métal alcalino-terreux tel que Ba, Ca, Mg; $NH_4^+$; $H^+$ et/ou un cation tétraalkylammonium,
- **W** est un nombre entier qui représente le nombre de molécules d'eau par cellule unitaire,
- **x** et **y** sont des nombres entiers qui représentent le nombre total de tétraédres par cellule unitaire et le rapport y/x est un nombre $\geqq 1$.
- **n** représente la valence du ou des cations.

M peut également représenter un cation métallique tel que le cuivre.

On ne sortirait pas du cadre de l'invention si on utilisait des composés à structure zéolithique tels que les aluminophosphates ($AlPO_4$), les silicoaluminophosphates (SAPO) et les boroaluminosilicates.

Les zéolithes (I) utilisées dans la présente invention sont choisies de préférence parmi :

- Les zéolithes du type A de formule (Ia)

$$M\ x/_n\ [(AlO_2)_{12}\ (SiO_2)_{12}]\ 27H_2O$$

  dans laquelle y/x est égal à 1
- Les zéolithes du type X de formule (Ib)

$$M\ x/_n\ [(AlO_2)_{86}(SiO_2)_{106}]\ 264H_2O$$

  dans laquelle y/x est égal à 1,23
- Les zéolithes du type Y de formule (Ic)

$$M\ x/_n\ [(AlO_2)_{56}(SiO_2)_{136}]\ 250H_2O$$

  dans laquelle y/x est égal à 2,43
- Les zéolithes du type L de formule (Id)

$$M\ x/_n\ [(AlO_2)_9(SiO_2)_{27}]22H_2O$$

  dans laquelle y/x est égal à 3
- Les zéolithes du type ZSM de formule (Ie)

$$M\,x/_n\,[(AlO_2)_3(SiO_2)_{93}]16H_2O$$

dans laquelle y/x est égal à 31

- Les zéolithes ZM de type mordénite ayant une faible teneur en sodium et un rapport y/x allant de 10 à environ 100,
- Les zéolithes naturelles tels que
  la chabazite $Ca_2\,[(AlO_2)_4\,(SiO_2)_8]$, $13H_2O$,
  la mordenite $Na_8\,[(AlO_2)_8(SiO2)_{40}]$, $24H_2O$,
  la faujasite $(Ca, Mg, Na_2, K_2)29{,}5\,[(AlO_2)_{59}(SiO_2)_{133}]235H_2O$,
  et les mélanges d'au moins deux des zéolithes précitées.

Parmi les zéolithes du type A on préfère celles dans la formule desquelles: M $x/_n$ représente $K_9\,Na_3$ : zéolithe 3A ; $Ca_{4,5}\,Na_3$ : zéolithe 5A et plus particulièrement $Na_{12}$ : zéolithe 4A.

Parmi les zéolithes du type X on préfère celles dans la formule desquelles: M $x/_n$ représente $Ca_{21,5}\,Na_{43}$: zéolithe 10 X et $Na_{86}$ : zéolithe 13 X

Les zéolithes employées selon l'invention sont généralement utilisées sous forme de poudre ayant un diamètre au moins égale à 1 μm et de préférence compris entre 2 et 50 μm.

Les zéolithes selon la présente invention sont généralement utilisées sous forme hydratée.

La composition ignifuge selon la présente invention est réalisée avantageusement par mélange mécanique à sec dans un mélangeur type TURBULA ou équivalent de la (ou des) zéolithe(s) avec l'agent deshydratant qui se trouve généralement sous forme de poudre ayant été préalablement broyée et tamisée de façon à obtenir une poudre ayant un diamètre au plus égal à 200 microns.

Le mélangeage se fait généralement à température ambiante et pendant une durée suffisante permettant d'obtenir un mélange homogène.

Les zéolithes selon l'invention sont utilisées avantageusement entre 0,25 % et 10 % en poids par rapport à la composition ignifugeante et de préférence entre 1 % et 5 %.

Les agents deshydratants selon la présente invention sont des composés susceptibles de former au moment de la combustion des acides tels que $H_3\,PO_4$, $H_3\,PO_3$, $H_4\,P_2\,O_7$. A titre d'illustration de tels agents deshydratants on citera les phosphates, pyrophosphates et polyphosphates d'ammonium, les phosphates de mélamine, le phosphite de mélamine, le phosphite et le disphosphite de pirérazine, le phosphite de guanazole, le pyrophosphate de mélamine et le pyrophosphate de piperazine.

Parmi ces composés on préfère tout particulièrement les polyphosphates d'ammonium répondant à la formule générale $(NH_4)_{n+2}\,P_n\,O_{3n+1}$ dans laquelle n représente un nombre entier $\geqq 2$.

Selon la présente invention, l'agent deshydratant est utilisé avantageusement entre 99,75 % et 90 % en poids par rapport à la composition ignifugeante et de préférence entre 99 % et 95 %.

La présente invention concerne également l'application des compositions contenant l'agent deshydratant et la zéolithe à l'ignifugation des mélanges de résines thermoplastiques. Selon la présente invention on entend par mélanges de résines thermoplastiques aussi bien les mélanges d'au moins deux résines thermoplastiques compatibles, que les mélanges d'au moins deux résines thermoplastiques incompatibles.

Dans ce dernier cas afin d'accroître la miscibilité des résines thermoplastiques, on ajoute au mélange desdites résines un ou plusieurs agents de compatibilité.

De tels mélanges de résines thermoplastiques incompatibles contenant un ou plusieurs agents de compatibilité sont communément dénommés alliages.

La présente invention concerne tout particulièrement l'application des compositions contenant l'agent deshydratant et la zéolithe à l'ignifugation des alliages thermoplastiques.

A titre d'illustration d'alliages qui peuvent être ignifugées par les compositions selon la présente invention on citera tout particulièrement les alliages d'au moins un polyamide et d'au moins une polyoléfine compatibilisés par au moins un agent de compatibilité.

A titre d'illustration de polyamides entrant dans l'alliage on citera les polyamides résultant de la polycondensation d'un ou plusieurs aminoacides tels que les acides aminocaproïque, amino-7 heptanoïque, amino-11 undécanoïque, d'un ou plusieurs lactames, tels que le caprolactame, le lauryllactame, d'un ou plusieurs sels ou mélanges de diamines telles l'hexaméthylènediamine, la dodécaméthylènediamine avec des diacides tels que les acides téréphtalique, adipique, azélaïque ou des mélanges de tous ces monomères, ce qui conduit à des copolyamides.

A titre d'illustration de polyoléfines entrant dans l'alliage on peut citer les homopolymères du propylène et les copolymères d'éthylène et de propylène ayant une proportion molaire d'éthylène comprise entre 0,5 % et 30 %.

Comme agent de compatibilité particulièrement bien adapté pour compatibiliser notamment au moins un polyamide et au moins une polyoléfine on peut citer notamment les copolymères éthylène/propylène greffés

anhydride maléique sur lequel on fait réagir un oligomère de polyamide de formule

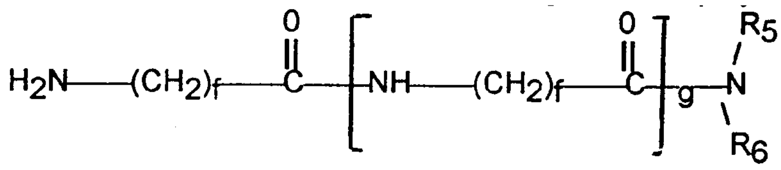

dans laquelle :

- f est un nombre compris entre 3 et 11,
- g est un nombre compris entre 5 et 80,
- $R_5$ est l'hydrogène ou un groupement alkyle linéaire ou ramifié contenant jusqu'à 20 atomes de carbone,
- $R_5$ est un groupement ayant jusqu'à 20 atomes de carbone alkyle ou alcényle linéaire ou ramifié, un radical cycloaliphatique, saturé ou non, un radical aromatique ou une combinaison des précédents.

Pour plus de détails on pourra se reporter au brevet Français FR 2 629 090 dont le contenu est inclu ici par référence.

La quantité de la composition -agent deshydratant/zéolithe- selon la présente invention, défini comme le taux de charges est fonction du degré d'ignifugation désiré.

Il peut être compris entre 5 % et 60 % en poids par rapport au mélange de résines thermoplastiques ignifugé.

D'une façon générale on obtient un comportement au feu amélioré et une bonne conservation des propriétés mécaniques avec un taux de charges compris entre 15 % et 35 %.

L'incorporation de la composition selon l'invention au mélange de résines thermoplastiques s'effectue généralement par malaxage des composés de la composition finement divisés dans le mélange de résines thermoplastiques fondu.

Tout appareil assurant une bonne dispersion peut donc convenir. Conviennent particulièrement bien à cet effet les malaxeurs type BUSS® ou WERNER et PFLEIDER®.

Les conditions de malaxage doivent être appropriés pour obtenir une bonne dispersion des composés de la composition dans le mélange de résines thermoplastiques fondu, cette démarche relevant de la compétence de l'homme du métier.

Le compound obtenu est généralement granulé.

Les granulés peuvent être moulés par injection ou par compression à des températures convenables en éprouvettes normalisées pour mesurer l'indice d'oxygène et pour pratiquer l'essai de réaction au feu UL 94.

Une manière simple d'opérer consiste à mélanger à sec les granulés du mélange de résines thermoplastiques et les composés de la composition qui peuvent être sous forme de poudre dans un mélangeur type TURBULA® ou, plus simplement, au tonneau et à alimenter avec ce mélange un malaxeur approprié.

En plus de la composition selon l'invention on peut incorporer d'autres additifs tels que pigments colorants, stabilisants vis à vis des rayons ultraviolets, agents de démoulage, stabilisants à la dégradation thermique et charges.

La présence des zéolithes dans les compositions ignifugeantes selon la présente invention limite la quantité de CO et de fumées dégagés au moment de la combustion. Elle diminue également l'opacité desdites fumées.

Les exemples suivants explicitent l'invention.

Les formulations ont été préparées en utilisant les constituants suivants :

. un alliage thermoplastique (A1) commercialisé par la Société ELF-ATOCHEM S.A sous la dénomination ORGALLOY R 6000 contenant

- 57 % en poids d'un polyamide 6,
- 33 % en poids d'un homopolymère du propylène et,
- 10 % en poids d'un agent de compatibilité tel que décrit dans l'exemple 1 du brevet FR 2 629 090 présentant un point de fusion de 220°C selon la norme ISO R 1218 et une température de fléchissement sous charge égale à 130°C selon la norme ASTM D 648 (sous une charge de 0,46 MPa).

L'agent deshydratant est le polyphosphate d'ammonium (APP) commercialisé par la Société HOECHST sous la dénomination EXOLIT 422 présentant une teneur pondérale en phosphore égale à 29 %.

Les zéolithes utilisées sont la zéolithe 4A et la zéolithe 13X commercialisées par la Société CECA sous les dénominations respectives de SILIPORITE 4A et SILIPORITE 13X.

On a indiqué dans le tableau les quantités en parties en poids de constituants utilisés pour préparer les formulations.

Ces formulations ont été réalisées par mélangeage à sec au tonneau des différents composés de la

composition ignifugeante qui se présentent sous forme de poudres avec l'alliage A1 qui se présente sous forme de granulés.

On alimente ensuite avec le mélange un malaxeur BUSS dont les températures moyennes sont comprises entre 230°C - 240°C.

Les joncs qui en sont extrudés sont refroidis à l'air et découpés.

Les granulés ainsi obtenus après séchage sont moulés par injection en éprouvette normalisées sur lesquelles on mesure l'incide d'oxygène (OI) exprimé en % selon la norme NF T 51071 et on pratique l'essai de réaction au feu UL 94 selon la norme NFT 51072 (épaisseur des éprouvettes = 3,2 mm).

| EXEMPLES<br>FORMULATIONS | 1 | 2 | 3 | 4 |
|---|---|---|---|---|
| Alliage A1 | 100 | 70 | 70 | 80 |
| APP | | 29 | 29 | 19,3 |
| Zéolithe 4A | | 1 | | 0,7 |
| Zéolithe 13X | | | 1 | |
| IO (%) | 18,3 | 42,2 | 39,8 | 31 |
| UL 94 | NC* | VO | VO | NC |

* NC = non classé

## TABLEAU

### Revendications

1. Composition caractérisée en ce qu'elle comprend au moins un agent deshydratant et au moins une zéolithe.

2. Composition selon la revendication 1, caractérisée en ce que la zéolithe est un aluminosilicate cristallin dont la plus petite cellule unitaire est représentée par la formule :

$$Mx/_n\ [(AlO_2)_x,\ (SiO_2)_y]w\ H_2O \qquad (I)$$

dans laquelle :
   - **M** représente un cation d'un métal alcalin tel que Li, Na, K et/ou un cation d'un métal alcalino-terreux tel que Ba, Ca, Mg; $NH_4^+$; $H^+$ et/ou un cation tétraalkylammonium,
   - **W** est un nombre entier qui représente le nombre de molécule d'eau par cellule unitaire,
   - **x** et **y** sont des nombres entiers qui représentent le nombre total de tétraédres par cellule unitaire et le rapport y/x est un nombre ≧ 1.
   - **n** représente la valence du ou des cations.

3. Composition selon la revendication 2, caractérisée en ce que la zéolithe de formule (I) est choisie parmi :
   - Les zéolithes du type A de formule (Ia)

     $$M\ x/_n\ [(AlO_2)_{12}\ (SiO_2)_{12}]\ 27H_2O$$

     dans laquelle y/x est égal à 1
   - Les zéolithes du type X de formule (Ib)

     $$M\ x/_n\ [(AlO_2)_{86}(SiO_2)_{106}]\ 264H_2O$$

     dans laquelle y/x est égal à 1,23
   - Les zéolithes du type Y de formule (Ic)

     $$M\ x/_n\ [(AlO_2)_{56}(SiO_2)_{136}]\ 250H_2O$$

     dans laquelle y/x est égal à 2,43
   - Les zéolithes du type L de formule (Id)

$M\ x/_n\ [(AlO_2)_9(SiO_2)_{27}]22H_2O$

dans laquelle y/x est égal à 3

- Les zéolithes du type ZSM de formule (Ie)

$M\ x/_n\ [(AlO_2)_3(SiO_2)_{93}]\ 16H_2O$

dans laquelle y/x est égal à 31

- Les zéolithes ZM de type mordénite ayant une faible teneur en sodium et un rapport y/x allant de 10 à environ 100,
- Les zéolithes naturelles choisies parmi :
  la chabazite $Ca_2\ [(AlO_2)_4\ (SiO_2)_8]$, 13H $_2$O,
  la mordenite $Na_8[(AlO_2)_8\ (SiO2)_{40}]$, $24H_2O$ et
  la faujasite (Ca, Mg, $Na_2$, $K_2$)29,5 $[(AlO_2)_{59}\ (SiO_2)_{133}]\ 235H_2O$.

**4.** Composition selon la revendication 3, caractérisée en ce que dans les zéolithes de formule (la) M $^x/_n$ représente $Na_{12}$.

**5.** Composition selon la revendication 3, caractérisée en ce que dans les zéolithes de formule (Ib) M $^x/_n$ représente $Na_{86}$

**6.** Composition selon la revendication 1, caractérisée en ce que l'agent deshydratant est choisi parmi les phosphates, pyrophosphates et polyphosphates d'ammonium, les phosphates de mélamine, le phosphite de mélamine, le phosphite et le disphosphite de piperazine, le phosphite de guanazole, le pyrophosphate de mélamine et le pyrophosphate de piperazine.

**7.** Composition selon la revendication 6, caractérisée en ce que l'agent deshydratant est un polyphosphate d'ammonium de formule $(NH_4)_{n+2}\ P_n\ O_{3+1}$ dans laquelle n est un nombre entier $\geqq$ 2.

**8.** Composition selon la revendication 1, caractérisée en ce qu'elle contient de :
- 0,25 % à 10 % en poids de zéolithe et,
- de 99,75 % à 90 % en poids d'agent deshydratant.

**9.** Composition selon la revendication 1, caractérisée en ce qu'elle contient de :
- 1 % à 5 % en poids de zéolithe et,
- de 99 % à 95 % en poids d'agent deshydratant.

**10.** Alliages de résines thermoplastiques ignifugés par la composition selon l'une des revendications 1 à 9.

**11.** Alliages de résines thermoplastiques selon la revendication 10, caractérisés en ce que la quantité de la composition est comprise entre 5 % et 60 % en poids par rapport à l'alliage de résines thermoplastiques ignifugé et de préférence entre 15 % et 35 %.

**12.** Alliages de résines thermoplastiques selon la revendication 10, caractérisés en ce que les alliages sont choisis parmi les alliages d'au moins un polyamide et d'au moins une polyoléfine compatibilisés par au moins un agent de compatibilité.

Office européen des brevets

# RAPPORT DE RECHERCHE EUROPEENNE

Numero de la demande
EP 94 40 1317

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | PATENT ABSTRACTS OF JAPAN vol. 14, no. 270 (C-027) 12 Juin 1990 & JP-A-20 080 450 (WATANABE TOICHI) 20 Mars 1990 * abrégé * --- | 1-12 | C09K21/02 C09K21/14 C08K3/34 |
| Y | PATENT ABSTRACTS OF JAPAN vol. 17, no. 63 (C-1024) 8 Février 1993 & JP-A-42 068 354 (WATANABE TOICHI) 24 Septembre 1992 * abrégé * --- | 1-12 | |
| Y | DATABASE WPI Week 9132, Derwent Publications Ltd., London, GB; AN 91-234963 & JP-A-3 153 747 (SANKYO) 1 Juillet 1991 * abrégé * --- | 1-12 | |
| Y | PATENT ABSTRACTS OF JAPAN vol. 10, no. 43 (C-329) 20 Février 1986 & JP-A-60 192 742 (IMAHAMA TOSHINOBU) 1 Octobre 1985 * abrégé * --- | 1-12 | DOMAINES TECHNIQUES RECHERCHES (Int.Cl.5) |
| Y | US-A-3 428 595 (TSUKADA) 18 Février 595 * revendication 1 * * colonne 2, ligne 16 - ligne 32 * * colonne 3, ligne 6 - ligne 48 * --- | 1-12 | C09K C08K |
| Y | DE-A-37 28 397 (BAYER AG) * revendications 1-3 * * colonne 3, ligne 9 - ligne 17 * --- | 1-12 | |
| A | EP-A-0 132 936 (MINNESOTA MINING.) * revendications 1,6 * * abrégé * ----- | 1-12 | |

Le présent rapport a été établi pour toutes les revendications

| Lieu de la recherche | Date d'achèvement de la recherche | Examinateur |
|---|---|---|
| LA HAYE | 10 Août 1994 | Nicolas, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)